Europäisches Patentamt

European Patent Office

Office européen des brevets

(11) Publication number: 0 349 026
A1

# EUROPEAN PATENT APPLICATION

(21) Application number: 89201179.2

(22) Date of filing: 10.05.89

(51) Int. Cl.4: A01C 5/02

(30) Priority: 29.06.88 IT 2114888

(43) Date of publication of application:
03.01.90 Bulletin 90/01

(84) Designated Contracting States:
AT BE CH DE ES FR GB GR IT LI LU NL SE

(71) Applicant: CLABER S.P.A.
Via Pontebbana, 22
I-33080 Fiume Veneto Pordenone(IT)

(72) Inventor: Roman, Gianfranco
Via Coletti, 24
I-33087 Pasiano Pordenone(IT)

(74) Representative: Mittler, Enrico et al
c/o Marchi & Mittler s.r.l. Viale Lombardia, 20
I-20131 Milano(IT)

(54) Tool for planting, removing and transplanting bulbs and garden or terrace plants.

(57) The tool consists of a pair of valves (2) with a substantially semicircular cross-section hinged together so that they are movable between an open position and a closed position. In the open position there is defined a substantially cylindrical external and internal conformation, while in the closed position there is defined a substantially conical external and internal conformation.

## Fig.1

## Tool for planting, removing and transplanting bulbs and garden or terrace plants

The present invention has as its object a tool to plant, remove and transplant bulbs and garden or terrace plants.

The difficulties are known which professional gardeners and gardening enthusiasts in general come up against every time they have to plant or remove a bulb or transplant a plant.

The only tool usable at present is a trowel to form the hole destined to accommodate the bulb or plant to be planted or to widen the one which already holds the bulb or plant to be removed. It is certainly an inadequate and in any case insufficient tool.

Object of the present invention is to accomplish a tool capable of solving completing and effectively the problem of the insertion and of the extraction of bulbs and plants in gardens and terraces.

According to the invention such object has been attained with a tool characterized in that it consists of a pair of valves with a substantially circular cross-section hinged together so that they are movable between an open position with a parallel arrangement defining a substantially cylindrical external conformation and internal passage and a closed position with an arrangement converging towards a tip so as to define a substantially conical external conformation and internal space.

One example of an embodiment according to the invention is illustrated for greater clarity, but with no limitative intent, in the enclosed drawings, wherein:

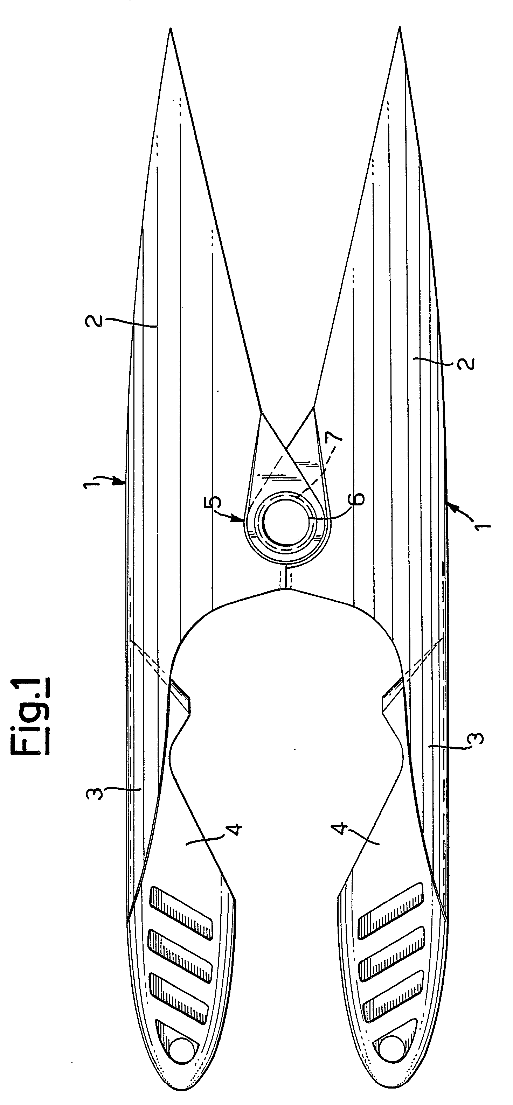

Fig. 1 shows a lateral view of a tool according to the invention in the open position;

Fig. 2 shows said tool again in the open position, seen from the left with respect to Fig. 1;

Fig. 3 shows said tool in a plan view from above with respect to Fig. 1;

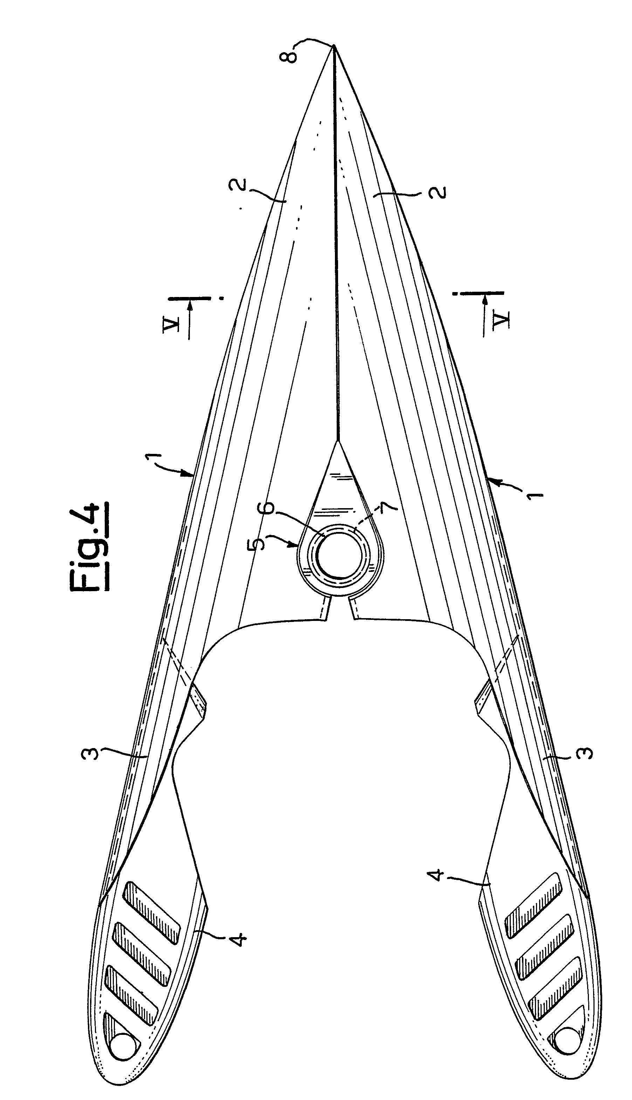

Fig. 4 shows said tool in a lateral view as in Fig. 1 but in the closed position;

Fig. 5 shows said tool in a cross-sectional view taken along the line V-V of Fig. 4.

The tool shown in the drawings is constituted by a pair of levers of the first kind 1, each of which includes a valve part 2 with an approximately semicircular cross-section (Fig. 5) and a handgrip and operating part 3 provided with a handle 4.

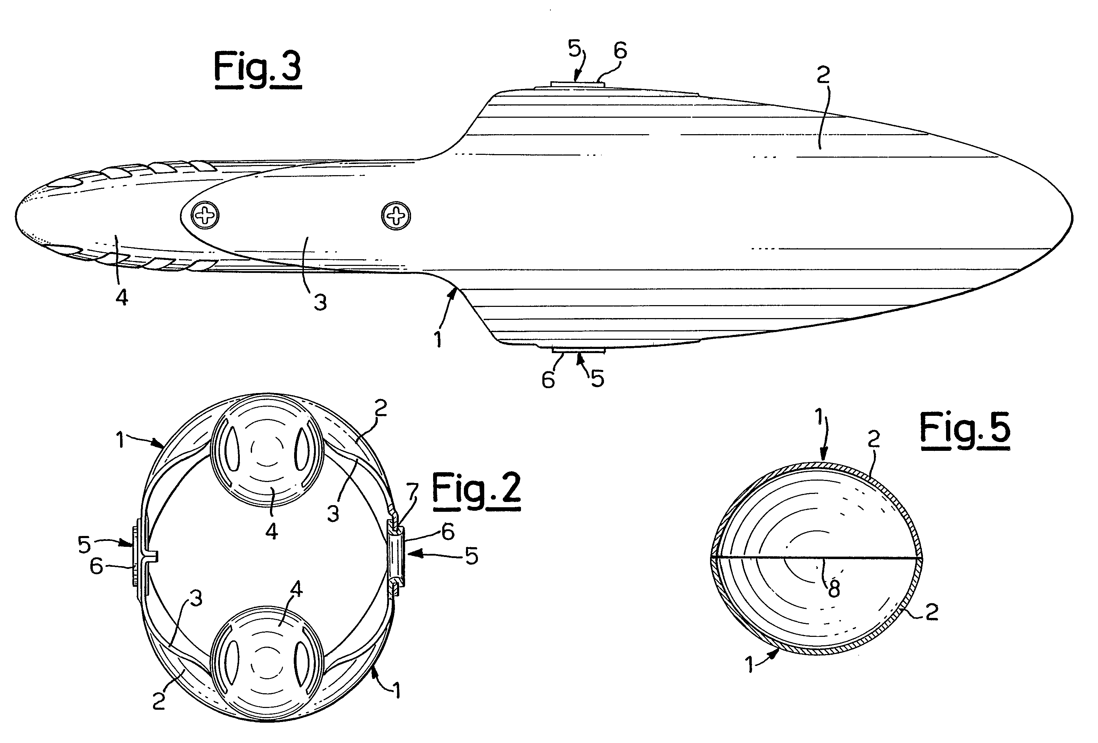

The two levers 1 are hinged together in a pair of fulcrums 5 with a coincident axis, each of which is defined by an external tubular flap 6 of one of the two levers slidably inserted and held in a circular hole 7 of the other lever (Fig. 2).

As an effect of such hinging the two levers 1 are movable between the open position of Fig.s 1 and 2 and the closed position of fig.s 4 and 5.

In the open position the two valves 2 are arranged in a parallel manner so as to define a substantially cylindrical external conformation and internal passage.

In the closed position, however, the two valves 2 converge towards a tip 8 so as to define a substantially conical external conformation and internal space.

The open position of Fig.s 1 and 2 is suitable for inserting the valves 2 in the ground around a bulb or plant to be removed.

The closed position of Fig.s 4 and 5 is in turn suitable for subsequently grasping the bulb or plant and executing the extraction from the ground. It is also suitable for inserting a bulb or plant in the ground, both if a hole is already provided and if it is required to be formed using the tool as an awl and then opening it as in Fig.s 1 and 2. Of course, once the tool is open, the bulb or plant remains inserted in the hole in the ground.

## Claims

1. Tool for planting, removing and transplanting bulbs and garden or terrace plants, characterized in that it consists of a pair of valves (2) with a substantially circular cross-section hinged together so that they are movable between an open position with a parallel arrangement defining a substantially cylindrical external conformation and internal passage and a closed position with an arrangement converging towards a tip (8) so as to define a substantially conical external conformation and internal space.

2. Tool according to claim 1, characterized in that said valves (2) form part of respective levers of the first kind (1) provided with handgrip and operating handles (4) at the opposite extremity to that which defines said tip (8).

3. Tool according to claim 1, characterized in that said valves (2) are hinged together opposite a pair of fulcrums (5) with a coincident axis, formed by means of external tubular flaps (6) of one of said valves slidably inserted and held in holes (7) of the other valve.

Fig.1

EP 0 349 026 A1

**Fig.3**

5  6

2

4

3

1

6  5

EP 0 349 026 A1

**Fig.2**

2

1

3

4

7

5

6

6

5

3

2

4

1

**Fig.5**

1

2

8

2

1

## Fig.4

EP 0 349 026 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-895525 (GRANDJAQUOT)<br>* page 1, line 41 - page 2, line 4; figures 1-4 * | 1, 2, 3 | A01C5/02 |
| X | CH-A-177161 (JORDAN)<br>* page 1, line 22 - page 2, line 5; figures 1, 2, 3 * | 1, 2, 3 | |
| X | FR-A-972898 (DOUNIAUX)<br>* page 1, line 15 - page 2, column 2, line 10; figures 1-5 * | 1, 2, 3 | |

TECHNICAL FIELDS
SEARCHED (Int. Cl.5 )

A01C

The present search report has been drawn up for all claims

| Place of search | Date of completion of the search | Examiner |
|---|---|---|
| THE HAGUE | 04 OCTOBER 1989 | VERMANDER R.H. |